# EUROPÄISCHE PATENTSCHRIFT

(11) **EP 0 390 941 B1**
(45) Veröffentlichungstag und Bekanntmachung des Hinweises auf die Patenterteilung: **03.02.1993**
(21) Anmeldenummer: 89105779.6
(22) Anmeldetag: 01.04.1989
(51) Int. Cl.: G01N 1/22

(54) **Sonde zur Entnahme von aggressiven Gasen aus Kanälen, insbesondere Rauchgaskanälen**
Probe for sampling hazardous gases from ducts, particularly smoke ducts
Sonde de prélèvement de gaz dangereux hors des conduites, en particulier hors des conduites de fumées

(43) Veröffentlichungstag der Anmeldung: 10.10.1990
(73) Patentinhaber: FAG KUGELFISCHER GEORG SCHÄFER Kommanditgesellschaft auf Aktien, 97419 Schweinfurt (DE)
(72) Erfinder: Wendt, Horst, D-8520 Erlangen (DE)
(74) Vertreter: Rehmann, Klaus H.

(56) Entgegenhaltungen:
- DE-A- 1 943 669
- FR-A- 2 286 379
- SOVIET INVENTIONS ILLUSTRATED, Woche K41, 23. November 1983, Section J04, class S03, Zusammenfassung Nr. 83-788440/41, Derwent Publication Ltd., London, GB;& SU-A-983 494
- SOVIET INVENTIONS ILLUSTRATED, Woche C36, 15. Oktober 1980, Section ALMA, class S03, Zusammenfassung Nr. H7567/C/36, Derwent Publications Ltd, London, GB;& SU-A-709 976

## Beschreibung

Die Erfindung betrifft eine Sonde zur Entnahme von aggressiven Gasen aus Kanälen. Derartige Sonden sind bekannt. Sie bestehen aus vier in Form eines Kreuzes angeordneten, gleichstarken Rohren, die mittels Distanzscheiben auf Abstand gehalten werden und die gemeinsam von einem Schutzrohr umhüllt werden. Diese vier Rohre der bekannten Sonde bestehen aus zwei sogenannten Pitotrohren zur Differenzdruckfeststellung im Rauchkanal sowie einem Frischluftzuführungsrohr und einem Mischgasentnahmerohr. Die bekannten Sonden weisen verschiedene Nachteile auf. So benötigen sie einen entsprechend großen Einbauraum und durch den immer wieder wechselnden Taupunkt der entnommenen Gase entstehen aggressive Niederschläge in der Sonde.

In der FR-A-2 286 376 ist ein Verfahren und eine Vorrichtung zur Probeentnahme für Analysegeräte in strömenden Abgasen offenbart, bei welchen der Hauptgasstrom mittels eines mießgasfreien Trägergases verdünnt wird und Proben zur Gasanalyse aus diesem verdünnten Gasgemisch entnommen werden. Dabei wird von der Vorrichtung (Strahlpumpe) der größte Teil des Gasgemisches wieder in den Abgaskamin zurückgeleitet.

Eine weitere Gasentnahmesonde ist in der DE-A-1 943 669 offenbart.

Die Erfindung hat sich die Aufgabe gestellt, eine Sonde zu schaffen, die sowohl eine kompakte Bauweise aufweist als auch das Auftreten aggressiver Kondensate innerhalb der Sonde verhindert.

Die Aufgabe wird erfindungsgemäß durch die Merkmale des Anspruches 1 gelöst.

In weiterer Ausgestaltung des Erfindungsgedankens hat es sich als vorteilhaft erwiesen, daß im inneren der Sonde an der Stelle an der die Frischluft mit dem entnommenen Abgas gemischt wird eine trichterförmige Ausbildung vorgesehen ist, deren Trichterform in Abhängigkeit von der Art und Menge des zu erwartenden aggressiven Gases so ausgebildet ist, daß keine Ausfällung von Staubbestandteilen durch eine Verwirbelung von Frischluft und Abgas entsteht.

Auf der Zeichnung ist die Erfindung in einer beispielsweisen Ausführungsform schematisch dargestellt.

Es zeigen:

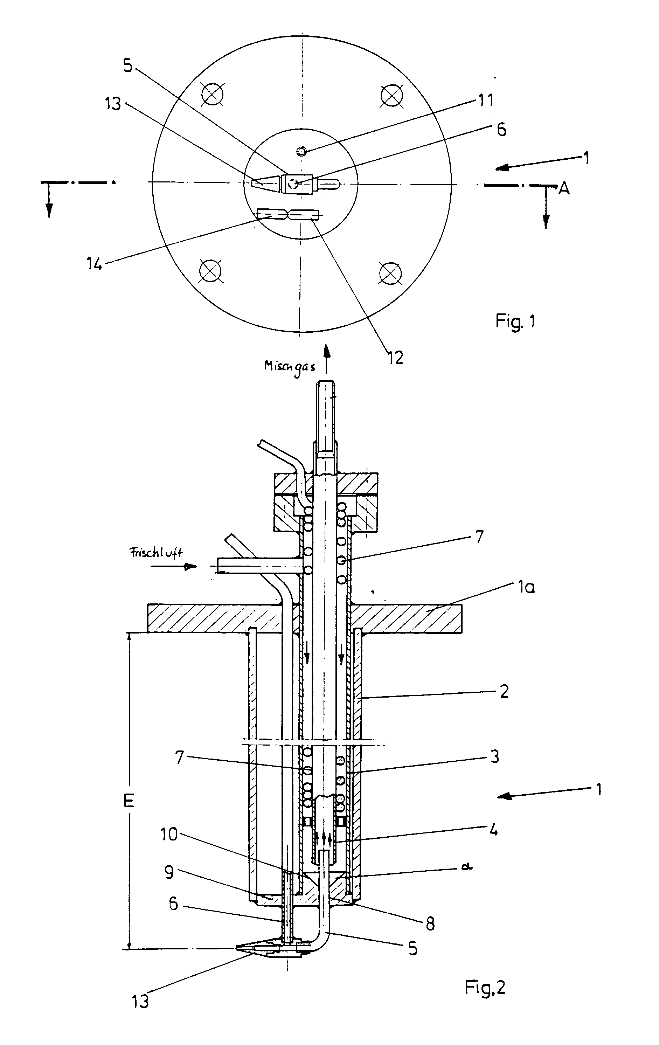

- Figur 1: eine Draufsicht von vorne auf die Sonde
- Figur 2: einen Schnitt durch die Sonde nach A-A der Figur 1.

Die Sonde 1 ist mit dem Flansch 1a so an einem nicht dargestellten Kanal befestigt, daß der mit E bezeichnete Teil der Sonde 1 in den Kanal hineinragt. Die rohrförmige Sonde 1 weist ein äußeres Schutzrohr 2 auf, in dessen Inneren ein Frischluftrohr 3 und im Inneren des Frischluftrohres 3 ein Mischgasführungsrohr 4 angeordnet ist. In das - in der Zeichnung - untere Ende des Mischgasführungsrohres 4 mündet ein Rauchgasentnahmerohr 5. Der Kopf des Rauchgasentnahmerohres 5 endet in einer Ansaugdüse 13 vor der ein Nulldruckrohr 6 abzweigt, welches an einen nicht dargestellten Differenzdruckregler angeschlossen ist. In dem Frischluftrohr 3 ist eine regelbare Heizeinrichtung 7, beispielsweise elektrische Heizwendel, angeordnet, die sowohl die das Frischluftrohr 3 durchströmende Frischluft als auch das Gasgemisch, welches das Mischgasführungsrohr 4 durchströmt, über den jeweiligen Taupunkt der Gase erhitzt.

Das eine Ende des Frischgasrohres 3 ist mit einem einen Gehäusedurchtritt 8 für das Rauchgasentnahmerohr 5 aufweisenden Gehäuseabschluß 9 versehen und weist im Inneren der Sonde 1 eine trichterförmige Ausbildung 10 auf. Der Winkel Alpha der trichterförmigen Ausbildung 10 ist abhängig von der Art und Menge des zu entnehmenden aggressiven Gases und ist so gewählt, daß keine Verwirbelung zwischen Frischluft und Abgas erfolgt, die eine Ausfällung von Stäuben zur Folge hätte.

Integriert in die Sonde 1 sind die zur Differenzdruckmessung im Kanal erforderlichen Pitotrohre, nämlich das Gesamtdruckrohr 14, das zur statischen Druckmessung benötigte Rohr 12 und das in das Rauchgasentnahmerohr 5 mündende Rohr 6, mit seinem ebenfalls zur Messung des statischen Druckes benötigte Druckrohr 11.

Die Sonde wird wie folgt betrieben:
Über Ansaugdüse 13 wird Abluft aus dem nicht dargestellten Kanal gesaugt. Gleichzeitig strömt mit Überdruck Frischluft über Frischluftrohr 3 bis zu der trichterförmigen Ausbildung 10 im Gehäuseabschluß 9, so daß Frischluft und Abgas miteinander gemischt durch das Mischgasführungsrohr 4 zu einer nicht dargestellten Meßstelle (Staubfilter) transportiert wird.

Die unterschiedlichen Strömungsgeschwindigkeiten im Kanal werden durch die Druckdifferenzen in den Rohren 14, 12 sowie 6 und 11 auf einen nicht dargestellten Differenzdruckregler weitergeleitet, der dann die Frischluftzufuhr entsprechend den Strömungsgeschwindigkeiten des Abgases im Kanal so regelt, daß immer eine geschwindigkeitsgleiche oder isokinetische Entnahme des Teilgasstromes erfolgt.

Damit innerhalb der Sonde 1 keine Kondensatbildung auftritt, wird sowohl das Frischluftrohr 3 als auch das Mischgasführungsrohr 4 gemeinsam über eine regelbare Heizeinrichtung 7 jeweils über die Temperatur des herrschenden Taupunktes erhitzt.

## Patentansprüche

1. Sonde (1) zur Entnahme von aggressiven Gasen aus Kanälen, insbesondere Rauchgaskanälen, und zum Verdünnen der Entnahmemenge mit Frischluft, wobei ein Rauchgasentnahmerohr (5) in einem, gegenüber dem Rauchgasentnahmerohr (5) einen größeren Durchmesser aufweisenden Mischgasführungsrohr (4) endet, so daß zwischen der Außenwand des Rauchgasentnahmerohrs (5) und der Innenwand des koaxialen Mischgasführungsrohrs (4) ein Zwischenraum besteht, durch den die Frischluft in das Mischgasführungsrohr (4) strömen kann, und das Mischgasführungsrohr (4) in einem, gegenüber dem Mischgasführungsrohr (4) einen größeren Durchmesser aufweisenden Frischluftrohr (3) angeordnet ist, durch welches die Frischluft entgegengesetzt zur Mischgasströmungsrichtung in dem Mischgasführungsrohr (4) strömt, da das Ende des Frischluftrohres (3) mit einem einen Gehäusedurchtritt (8) für das Rauchgasentnahmerohr (5) aufweisenden Abschluß (9) versehen ist, wobei eine im Frischluftrohr (3) angebrachte Heizeinrichtung (7) sowohl die Frischluft als auch das Mischgas über die Temperatur des jeweiligen Taupunktes erhitzt.

2. Sonde nach Anspruch 1, dadurch gekennzeichnet, daß als Heizeinrichtung (7) elektrische Heizwendeln vorgesehen sind.

3. Sonde nach Anspruch 1, dadurch gekennzeichnet, daß der den Gehäusedurchtritt (8) für das Rauchgasentnahmerohr (5) aufweisende Gehäuseabschluß (9) im Inneren der Sonde (1) eine trichterförmige Ausbildung (10) aufweist.

4. Sonde nach Anspruch 3, dadurch gekennzeichnet, daß der Winkel (Alpha) der trichterförmigen Ausbildung (10) in Abhängigkeit von der Art und Menge des aggressiven Gases, derart ausgebildet ist, daß keine eine Ausfällung von Stäuben bewirkende Verwirbelung von Frischluft und Abgasen entsteht.

5. Sonde nach einem oder mehreren der Ansprüche 1 bis 4, dadurch gekennzeichnet, daß der in den Rauchgaskanal ragenden Teil (E) der Sonde (1) von einem Schutzrohr (2) umhüllt ist.

## Claims

1. A probe (1) for the sampling of hazardous gases from ducts, especially smoke ducts, and for the dilution of the sampled gas with fresh air, in which a flue-gas sampling tube (5) terminates in a gas mixture guide tube (4) of greater diameter than said flue-gas sampling tube (5), so that there is an intermediate space between the external wall of the flue-gas sampling tube (5) and the internal wall of the coaxial gas mixture guide tube (4), enabling the flow of fresh air through said gas mixture guide tube (4) which itself is accommodated within a fresh air tube (3) of greater diameter and through which fresh air flows in a direction counter to the direction of flow of the gas mixture in the gas mixture guide tube (4), since the end of the fresh air tube (3) has a housing end section (9) with a housing opening (8) for the flue-gas sampling tube (5), whereby a heating device (7) is accommodated within the fresh air tube (3) and heats both the fresh air and the gas mixture to a temperature above their respective condensation points.

2. A probe according to Claim 1, characterised in that the heating device (7) is in the form of electrical heating coils.

3. A probe according to Claim 1, characterised in that the housing end section (9) accommodating the housing opening (8) for the smoke gas sampling tube (5) has a funnel-shaped section (10) within the probe (1).

4. A probe according to Claim 3, characterised in that the angle (alpha) of the funnel-shaped section (10) is selected, in dependence upon the type and quantity of the hazardous gases, in such a way as to avoid a vortical motion of the fresh air and waste gas and resultant precipitation of dust.

5. A probe according to one or more of Claims 1 to 4, characterised in that the section (E) of the probe (1) which projects into the smoke gas duct is enveloped by a protective tube (2).

## Revendications

1. Sonde (1) pour prélever des gaz agressifs à partir de conduits, en particulier de conduits de fumées, et pour diluer avec de l'air frais la quantité prélevée, dans laquelle un tube de prélèvement des fumées (5) se termine par un tube de transport du mélange gazeux (4) présentant un diamètre plus grand que le tube de prélèvement des fumées (5), de telle façon qu'entre la paroi extérieure du tube de prélèvement des fumées (5) et la paroi intérieure du tube coaxial de transport du mélange gazeux (4), il existe un intervalle par lequel l'air frais peut s'écouler vers le tube de transport du mélange gazeux (4), et le tube de transport du mélange gazeux (4) est disposé dans un tube d'air frais (3), qui présente un diamètre plus grand que le tube de transport du mélange gazeux (4) et par lequel l'air frais s'écoule en sens opposé au sens de l'écoulement du mélange dans le tube de transport du mélange gazeux (4), l'extrémité du tube d'air frais (3) étant équipée d'une fermeture (9) présentant un passage (8) dans le carter pour le tube de prélèvement des fumées (5), étant entendu qu'un dispositif de chauffage (7), disposé dans le tube d'air frais (3), élève la température aussi bien de l'air frais que du mélange gazeux au-dessus de celle de leur points de rosée respectifs.

2. Sonde suivant la revendication 1, caractérisée en ce que, comme dispositif de chauffage (7), on prévoit des filaments électriques de chauffage.

3. Sonde suivant la revendication 1, caractérisé en ce que la fermeture de carter (9), qui comporte le passage (8) dans le carter pour le tube de prélèvement des fumées (5), présente à l'intérieur de la sonde 1, une configuration en entonnoir (10).

4. Sonde suivant la revendication 1, caractérisée en ce que l'angle (alpha) de la configuration en entonnoir (10) est choisi, en fonction du type et de la quantité du gaz agressif, de telle façon qu'il ne se produise pas de tourbillon de l'air frais et des fumées provoquant une précipitation de poussières.

5. Sonde suivant l'une quelconque ou plusieurs des revendications 1 à 4, caractérisée en ce que la partie (E) de la sonde (1), dépassant dans le conduit de fumée, est gainée par un tube de protection (2).
